# EUROPÄISCHE PATENTSCHRIFT

(11) **EP 2 448 785 B1**
(45) Veröffentlichungstag und Bekanntmachung des Hinweises auf die Patenterteilung: **06.09.2017**
(21) Anmeldenummer: 10744497.8
(22) Anmeldetag: 02.07.2010
(51) Int. Cl.: B60Q 1/04, F21V 23/02, H05B 41/04, H05B 41/288

(54) **ANSTEUERMODUL FÜR GASENTLADUNGSLEUCHTE**
ACTIVATION MODULE FOR A GAS DISCHARGE LAMP
MODULE D'AMORÇAGE POUR LAMPE À DÉCHARGE

(30) Priorität: 03.07.2009 DE 102009033068
(43) Veröffentlichungstag der Anmeldung: 09.05.2012
(73) Patentinhaber: SUMIDA Components & Modules GmbH, 94130 Obernzell (DE)
(72) Erfinder: DUSCHL, Anton, 94051 Hauzenberg (DE); SCHICHL, Roman, 94036 Passau (DE); MAI, Udo, 94107 Untergriessbach (DE)
(74) Vertreter: Grünecker Patent- und Rechtsanwälte PartG mbB
(86) Internationale Anmeldenummer: PCT/EP2010/003998
(87) Internationale Veröffentlichungsnummer: WO 2011/000571

(56) Entgegenhaltungen:
- WO-A1-2010/060837
- DE-A1-102006 000 169
- DE-U1-202005 007 484
- US-A- 6 084 354
- US-A1- 2004 066 150
- US-A1- 2008 055 814
- US-A1- 2008 157 696
- US-A1- 2008 309 240

## Beschreibung

Die vorliegende Erfindung betrifft allgemein Baugruppen zur Versorgung bzw. Ansteuerung von Gasentladungsleuchten, etwa Zündmodule, Vorschaltgeräte und dergleichen, und kompakte Bauträger zur Aufnahme der elektrischen Komponenten, wobei eine kompakte Bauform erreicht wird, etwa für eine Xenonleuchte für Scheinwerfer, wie sie beispielsweise im Fahrzeugbereich zunehmend verwendet werden.

Bei der Verwendung von Gasentladungsleuchten, etwa beispielsweise Xenonleuchten, insbesondere im Fahrzeugbereich oder auch in anderen Anwendungsbereichen, in denen erhöhte Anforderungen an die Ansteuerelektronik für die Entladungsleuchte gestellt werden, wie dies beispielsweise im Einsatzbereich für mobile Geräte der Fall ist, sind einerseits hohe Anforderungen hinsichtlich der Spannungsfestigkeit und der Zuverlässigkeit einzuhalten, während andererseits auch kompakte Abmessungen erforderlich sind. Des Weiteren sollen die zum Betreiben von Entladungsleuchten und insbesondere zum Zünden dieser Entladungsleuchten erforderlichen elektronischen Komponenten einschließlich des Zündtransformators in kostengünstiger und zuverlässiger Weise montierbar sein, wobei auch der mechanischen Fixierung der elektronischen Bauelemente, etwa des Zündtransformators, eine große Bedeutung zukommt.

Bekanntlich sind insbesondere zum Zünden einer Entladungsleuchte relativ hohe Spannungen im Bereich von einigen 10 Kilovolt (kV), beispielsweise von etwa 30 kV, erforderlich, um eine zuverlässige Zündung des Gasgemisches in der Entladungskammer der entsprechenden Leuchte, die vielfach auch als Brenner bezeichnet wird, in Gang zu setzen. Die erforderliche hohe Zündspannung wird in der Regel mittels eines Zündtransformators erzeugt, der eine relativ geringe Primärspannung von etwa einigen hundert Volt von einer zugehörigen elektronischen Vorschalteinrichtung erhält und diese dann auf die hohe Zündspannung transformiert. Bei einer Verringerung der Abmessungen jeweiliger Funktionsgruppen, beispielsweise der Vorschalteinrichtung und der Zündeinrichtung, muss daher auch der Zündtransformator in einer geeigneten Konfiguration, beispielsweise im Hinblick auf die geometrische und magnetische Gestaltung des Kernmaterials und das Vorsehen der Primärwicklung und der Sekundärwicklung, bereit gestellt werden, um einerseits die erforderliche hohe Zündspannung zu erzeugen und um andererseits dennoch die erforderliche hohe Spannungsfestigkeit sicherzustellen. Zu diesem Zweck sind ausreichende Isolationsstrecken, insbesondere im Bereich des Zündtransformators, aber auch im Bereich anderer elektronischer Komponenten vorzusehen, um ein zuverlässiges Funktionieren der Zündanlage unter anspruchsvollen Umgebungsbedingungen zu gewährleisten, wie dies beispielsweise in Anwendungen im Fahrzeugbereich der Fall ist, wobei die entsprechenden elektronischen Komponenten über einen ausgedehnten Temperaturbereich bei entsprechenden Umwelteinflüssen, wie Schnee, Regen, Feuchtigkeit, mechanischer Rüttelbelastung und dergleichen in einer Umgebung mit einer hohen Störwellenaussendung zu betreiben sind. Bei der Montage eines Zündmoduls sind somit die elektronischen Bauelemente und der Zündtransformator auf einem oder mehreren geeigneten Baugruppenträgern so anzuordnen, dass die mechanische Zuverlässigkeit und damit auch die Zuverlässigkeit der jeweiligen elektrischen Verbindungen unter den anspruchsvollen Bedingungen gewahrt bleibt und auch die erforderliche Spannungsfestigkeit zwischen den einzelnen auf verschiedenen Potentialen liegenden elektrischen Anschlüssen sichergestellt ist. Zu diesem Zweck werden vielfach geeignete Kunststoffmaterialien in der Nähe der kritischen Komponenten des Baugruppenträgers vorgesehen, die damit geeignete Isolationsstrecken ergeben. So wird häufig versucht, geeignete "Labyrinthe" aus Kunststoffwänden zumindest im endgültig montierten Zustand eines Zündmoduls vorzusehen, so dass beispielsweise kritische Bereiche, etwa der Hochspannungsanschluss des Zündtransformators sowie der Anschlussbereich der Entladungsleuchte von spannungsfestem Kunststoffmaterial umgeben sind. Andererseits müssen diese Bereiche während der Montage des Zündmoduls gut zugänglich sein, um damit eine zuverlässige elektrische Verbindung, etwa durch Schweißen oder Löten, herzustellen. Beispielsweise ist in bekannten Zündmodulen ein Baugruppenträger vorgesehen, der mehrere Komponenten aufweist, die bei der Endmontage so ineinandergreifen, dass dadurch die gewünschten Kunststoffisolationsstrecken in den kritischen Hochspannungsbereichen erzeugt werden.

Des Weiteren wird für die erforderliche mechanische und elektrische Zuverlässigkeit des Zündtransformators dieser in der Regel nach dem Fixieren auf einem Baugruppenträger und nach dem elektrischen Anschluss mit Vergussmasse umgeben, wobei beispielsweise eine Komponente des Baugruppenträgers eine geeignete Kammer aufweist, in die der Zündtransformator eingeführt, angeschlossen und schließlich vergossen wird. Beim Vorgang des Vergießens des Zündtransformators ist es für eine erhöhte Zuverlässigkeit von großer Bedeutung, dass ein Auffüllen der entsprechenden Vergusskammer ohne Hohlräume stattfindet, um damit sowohl die mechanischen Eigenschaften als auch die elektrischen Eigenschaften auch bei anspruchsvollen Umgebungsbedingungen sicherzustellen. Bei der Montage des Zündtransformators und insbesondere beim Herstellen der elektrischen Verbindung zu einer Hochspannungsleiterbahn, die wiederum letztlich eine Verbindung zu der Entladungsleuchte herstellt, werden in der Regel Schweißverfahren, beispielsweise unter Anwendung eines Lasers, oder auch Lötverfahren unter Anwendung geeigneter Flussmittel ausgeführt. Dabei kann insbesondere beim Schweißverfahren Schmauch entstehen, der sich wiederum an den angrenzenden Wänden der Vergusskammer niederschlägt und somit nachteilig die Vergussanhaftung beim nachfolgenden Ausgießen der Vergusskammer beeinflusst und/oder die Vergussmasse direkt kontaminiert, was dann ebenfalls zu einer Beeinträchtigung der Isolationsfestigkeit führt. Durch diese mangelhafte Vergussanhaftung ergibt sich eine eingeschränkte Zuverlässigkeit im Hinblick auf mechanische Belastungen, etwa Rüttelbelastungen, und insbesondere auf die Isolationsfestigkeit des gesamten Aufbaus. In ähnlicher Weise führt auch die Verwendung eines Flussmittels bei einem Lötvorgang zu einer Kontaminierung der angrenzenden Vergusskammerwände, wodurch ebenfalls eine beeinträchtigte Vergussanhaftung während des nachfolgenden Prozesses stattfinden kann. Die Problematik einer unzureichenden Vergussanhaftung tritt noch mehr in der Vordergrund, wenn die Abmessungen eines entsprechenden Zündmoduls zu verringern sind, da dann auch die entsprechende Vergusskammer in ihrer Abmessung in der Regel verkleinert werden soll, was einerseits insgesamt höhere Anforderungen an die schließlich erforderliche Isolationsfestigkeit stellt, jedoch auch zu einer stärkeren Kontamination der Vergusskammerwände führen kann.

Daher ist es insbesondere bei einer weiteren Miniaturisierung entsprechender Zündmodule, wie sie beispielsweise für Scheinwerfer in Fahrzeugen oder auch für andere Anwendungen angewendet werden, in der Regel notwendig, neben einer geeigneten Anordnung und Fixierung der elektrischen Komponenten des Zündmoduls zur Einhaltung der erforderlichen Isolationsfestigkeit auch ggf. aufwendige Verfahren zur Dekontamination der Vergusskammerwände anzuwenden, woraus sich wiederum ein sehr komplexer Fertigungsprozess beim Herstellen des Zündmoduls ergibt. Bei einer weiteren Integration von elektrischen Komponenten, wie sie beispielsweise für die Steuerung des Betriebs der Gasentladungsleuchte vor, während und nach der Zündung erforderlich sind, ergeben sich bei dem gewünschten kompakten Aufbau, insbesondere im Automotivbereich noch anspruchsvollere Anforderungen, da neben Isolationsfestigkeit und der Störsicherheit auch thermische Aspekte berücksichtigt werden müssen. D. h., die beim Betreiben entsprechender Schaltungsgruppen auftretende Verlustwärme, wie sie etwa durch Spannungswandler und dergleichen auftritt in Verbindung mit der durch die Entladungsleuchte in den Leuchtesockel übertragene Wärme führt lokal zu hohen Temperaturen, die konventioneller Weise dazu führten, dass das Zündmodul in Verbindung mit dem Leuchtsockel einerseits und die weiteren elektronischen Komponenten in Form eines Vorschaltgeräts als getrennte Einheiten aufgebaut wurden, die über eine Kabelverbindung räumlich voneinander getrennt angeordnet sind. Obwohl damit die Problematik der elektromagnetischen Störung der einzelnen Schaltungsbereiche sowie die thermischen Eigenschaften der räumlich voneinander getrennten Schaltungsbereiche geringer sind, ergibt sich allerdings ein deutlich höherer Aufwand bezüglich der gesamten Materialkosten sowie der Montage der Entladungsleuchte und zugehöriger Ansteuerelektronik, da zwei Gehäuse sowie entsprechende Verbindungselemente erforderlich sind

Vor diesem technischen Hintergrund ist es eine Aufgabe der vorliegenden Erfindung, ein Modul zum Ansteuern einer Gasentladungsleuchte und insbesondere einer Entladungsleuchte für mobile Einsatzzwecke oder Fahrzeuge, bereitzustellen, wobei die Funktion eines Zündmoduls in Verbindung mit einem Leuchtensockel und die Möglichkeit zur Integration weiterer elektrischer Komponenten in einer Baugruppe gegeben ist.

Zur Lösung dieser Aufgabe wird gemäß der vorliegenden Erfindung ein Ansteuermodul für eine Gasentladungsleuchte mit den Merkmalen des Anspruchs 1 bereitgestellt.

Das erfindungsgemäße Ansteuermodul besitzt somit u.a. einen Träger, der elektrische Komponenten aufnehmen kann, die sowohl zum Zünden als auch zum Betreiben der Gasentladungsleuchte nach dem Zünden erforderlich sind. Damit wird sowohl das für die elektrischen Komponenten erforderliche Bauvolumen als auch die räumliche Anordnung der elektrischen Komponenten durch konstruktive Maßnahmen, d. h. durch die Gestalt und die Materialbeschaffenheit des Trägers, festgelegt. Dadurch gelingt es, zunächst eine für den störungsfreien und zuverlässigen Betrieb geeignete Anordnung der für das Zünden erforderlichen elektrischen Bauelemente und der für das Betreiben der Entladungsleuchte nach dem Zünden erforderlichen Bauelemente vorzusehen. Ferner ist ein Leuchtensockel an dem Träger angebracht, der auf Grund der thermischen Eigenschaften die relativ hohen Temperaturen, die beim Betrieb der Entladungsleuchte entstehen, bewältigen kann, also formstabil ist und nahezu keine oder nur eine sehr geringe Ausgasung zeigt. Dabei wird ein hochtemperaturfester Kunststoff eingesetzt, der neben der erhöhten thermischen Belastbarkeit auch eine darin integrierte Leiterbahn aufweist, so dass insbesondere die Hochspannungsverbindung zwischen der Gasentladungsleuchte und dem Zündtransformator in zuverlässiger Weise hergestellt wird. Dabei garantiert die integrierte Leiterbahn, dass die erforderliche hohe Spannungsfestigkeit auch bei kompaktem Aufbau gewährleistet ist, da kleinere Isolationsstrecken aufgrund der zuverlässigen Einbettung der Leiterbahn ausreichend sind. Des weiteren sind in dem erfindungsgemäßen Ansteuermodul mehrere elektrische Komponenten an dem Träger fixiert, die im Zusammenwirken mit dem Zündtransformator, die Gasentladungsleuchte während des Zündens und im Dauerbetrieb mit Energie versorgen. D. h., die im erfindungsgemäßen Ansteuermodul vorgesehenen elektrischen Komponenten einschließlich des Zündtransformators bilden ein Zündmodul, wobei weitere elektrische Komponenten bereits bei der Montage der Komponenten für die Zündeinheit vorgesehen werden oder in geeigneter Weise am Träger während einer beliebigen späteren geeigneten Montagephase angebracht werden, wobei durch die Ausbildung des Trägers die Lage der weiteren Komponenten auch bei einer erst späteren Montage in zuverlässiger Weise durch konstruktive Eigenschaften des Trägers vorgegeben ist. Damit wird ein Aufbau bereit gestellt, der im Hinblick auf Vibrationsbeständigkeit, Thermomanagement, etc. geeignet ist.

In einer weiteren vorteilhaften Ausführungsform ist zumindest ein Teil des Trägers aus Kunststoffmaterial mit einer geringeren Temperaturbeständigkeit im Vergleich zu dem Leuchtensockel aufbaut, wodurch sich erhebliche Kostenvorteile beim Aufbau des Ansteuermoduls ergeben, da der Leuchtensockel aus geeigneten Kunststoffmaterialien, z. B. PPS (Polyphenylensulfid) mit einem Schmelzpunkt von ca. 285°C, LCP (Flüssigkristall-Polymer), und dergleichen aufgebaut werden kann, wohingegen ein Teil oder der gesamte Träger aus anderen Kunststoffmaterialien, z. B. PA (Polyamid), PBT (Polybutylenterephthalat), und dergleichen, gefertigt wird. Beispielsweise kann der Träger in Form eines geeigneten Gehäuses aus kostengünstigem Kunststoffmaterial hergestellt werden, an und in welchem dann der temperaturfeste Kunststoff des Leuchtensockels in geeigneter Weise angebracht wird, beispielsweise durch Kleben, Heißverstemmen, Warmgasnieten, Pressverbinden, etc.

In einer weiteren vorteilhaften Ausführungsform weist der Leuchtensockel ferner einen Niederspannungsanschlussbereich auf, der ausgebildet ist, einen Niederspannungsanschluss der Entladungsleuchte zu kontaktieren und eine Verbindung zu einer Niederspannungsleitung des Ansteuermoduls herzustellen. Auf Grund des Kunststoffmaterials kann somit die Kontaktierung der beiden Anschlüsse der Entladungsleuchte zuverlässig unter Einhaltung erforderlicher Isolationsstrecken erfolgen, wobei beide Anschlüsse in dem hochtemperaturfesten Material des Leuchtensockels eingebettet sind und damit die erforderliche Temperaturbeständigkeit besitzt.

In weiteren vorteilhaften Ausführungsformen weist der Leuchtensockel ferner einen Hochspannungsbereich auf, der durch eine Hochspannungskappe hochspannungsfest isolierbar ist, während in anderen Ausführungsformen der Leuchtensockel einen Hochspannungsanschlussbereich aufweist, der von einem Vergussraum zum Einfüllen einer Vergussmasse nach der Kontaktierung des Hochspannungsanschlusses der Entladungsleuchte umgeben ist. Diese Gestaltungsweisen bieten somit einen hohen Grad an Flexibilität, da etwa durch die Hochspannungskappe ein Abdecken des Hochspannungsanschlussbereiches ohne ein Vergießen möglich ist. Andererseits wird in der Ausführungsform mit dem Vergussraum die Möglichkeit geboten, während einer beliebigen geeigneten Montagephase einen Verguss vorzunehmen, so dass bei Bedarf eine reduzierte Koronabildung erreicht wird.

Das Ansteuermodul weist gemäß einer weiteren Ausführungsform eine Vergusskammer auf, die den Zündtransformator lateral umschließt und mit einem Vergussmaterial gefüllt ist. Dadurch ergibt sich eine hohe Isolationsfestigkeit, wobei insbesondere durch geeignete Auswahl der Eigenschaften des Zündtransformators, etwa einem offenen Aufbau, ein schneller und lunkerfreier Vakuumverguss erreicht wird.

In weiteren vorteilhaften Ausführungsformen ist ein Ferritmaterial zumindest an einem Bereich benachbart zu dem Zündtransformator vorgesehen. Durch diese Maßnahme kann zum einen der magnetische Gesamtfluss in der Nähe des Zündtransformators verbessert werden, der häufig auf Grund des geforderten hohen Grades an Kompaktheit in Form eines nicht geschlossenen Transformators ausgeführt ist, so dass das an sich weniger effizientere magnetische Verhalten dadurch kompensiert werden kann und relativ kleine Windungszahlen in der Sekundärwicklung erreicht werden können. Des weiteren kann das Ferritmaterial auch als ein wirksames Abschirmmaterial im Hinblick auf magnetische Störungen dienen. Das Ferritmaterial kann beispielsweise in Form einer Ferritplatte innerhalb der Vergusskammer vorgesehen sein, wenn etwa in unmittelbarer Nähe des Zündtransformators ein besserer magnetischer Fluss gewünscht ist. Dazu sind in einigen Ausführungsformen Ferritplatten an jeweils den Stirnseiten eines nicht geschlossenen Transformators vorgesehen, d. h. eines Transformators mit einem magnetischen Kern, der keinen geschlossenen magnetischen Fluss innerhalb des Kernmaterials besitzt. Beispielsweise werden häufig stabförmige Transformatoren eingesetzt, so dass das Vorsehen von zusätzlichen Ferritplatten, etwa an den Stirnseiten und/oder an einer oder mehreren Seitenflächen ein verbessertes magnetisches Verhalten ergibt, wobei ein sehr kompakter Aufbau möglich ist. Des weiteren ergibt sich im Gegensatz zu geschlossenen Transformatoranordnungen, etwa in Form eines Ringkernes, die Möglichkeit einer effizienteren automatischen Bewicklung, was insbesondere im Hinblick auf die Reproduzierbarkeit der Transformatordaten sowie eine kostengünstige Montage vorteilhaft ist.

In einigen Ausführungsformen ist Ferritmaterial in der Vergussmasse, die den Zündtransformator umgibt, und/oder in einer oder mehreren Wandbereichen der Vergusskammer integriert. Auf diese Weise gelingt eine sehr kompakte Bauweise bei gleichzeitig ausgeprägter Verbesserung der magnetischen Eigenschaften des Zündtransformators, wobei ggf. die integrierten Ferritmaterialien auch eine bessere Wärmeleitfähigkeit des Trägermaterials zur Folge haben, so dass insgesamt auch eine bessere Verteilung der Abwärme, die in dem Ansteuermodul entsteht, möglich ist.

In einer weiteren vorteilhaften Ausführungsform weist der Träger eine Grundplatte und zumindest Seitenteile auf, wobei die Grundplatte und/oder eines oder mehrere de Seitenteile aus Kunststoffmaterial aufgebaut sind und wenn das Kunststoffmaterial ein oder mehrere leitende oder nicht leitende Metall enthaltende Materialien integriert sind. In dieser Ausbildung kann der Träger in Form eines Gehäuses oder einer anderen geeigneten Konstruktion vorgesehen werden, wobei die Eigenschaften der Kunststoffmaterialien in geeigneter Weise durch die zusätzlich integrierten Komponenten eingestellt werden. D. h., es können gewünschte Eigenschaften lokal oder global innerhalb des Trägers in einem effizienten Herstellungsverfahren in reproduzierbarer Weise erzeugt werden, etwa im Hinblick auf das Einbringen von Leiterbahnen, die Einstellung magnetischer Eigenschaften in Form von Ferritmaterialien, die Anpassung der Wärmeleitfähigkeit, und dergleichen. Beispielsweise ist in dieser Hinsicht Aluminiumoxid ein geeignetes Material, um eine hohe Wärmeleitfähigkeit bei dennoch einer gewünschten Isolationsfestigkeit zu erhalten. Alternativ oder zusätzlich können Metallbahnen, etwa in Form von Folien, Metallstücken und dergleichen in das Kunststoffmaterial integriert werden, so dass die elektrische und/oder die thermische Leitfähigkeit in geeigneter Weise eingestellt wird. Dazu können beispielsweise eine oder mehrere der integrierten Metallbahnen auch als Leiterbahnen fungieren, so dass teilweise die Verdrahtung des Ansteuermoduls im Material des Trägers untergebracht ist, wodurch zu erhöhter Robustheit im Hinblick auf Umwelteinflüsse beigetragen wird, während gleichzeitig auch eine hohe Isolationsfestigkeit bei geringen Abständen ermöglicht wird.

In einer weiteren vorteilhaften Ausführungsform ist die Kontur des Trägers der Kontur zumindest einiger der elektrischen Komponenten zur Verbesserung der Vibrationsbeständigkeit angepasst. Eine derartige Ausbildung des Trägers ist insbesondere vorteilhaft in Anwendungen, in denen ein hohes Maß an mechanischen Belastungen in Form von Schwingungen und Vibrationen auftritt. Dazu gehört insbesondere die Verwendung des Ansteuermoduls in Verbindung mit der Gasentladungsleuchte als Teil eines Fahrzeugscheinwerfers, da aufgrund dieser Gestaltungsweise größere elektrische Komponenten, etwa ein Kondensator, wie er typischerweise in einem Zündmodul verwendet ist, und eine Funkenstrecke mechanisch effizient am Träger befestigt werden können, ohne dass weitere zusätzliche Maßnahmen erforderlich sind oder ohne dass die entsprechenden elektrischen Verbindungen in unerwünschter Weise mechanisch stark belastet werden.

In einer weiteren vorteilhaften Ausführungsform bilden die elektrischen Komponenten eine Zündeinheit als eine erste Funktionsgruppe des Ansteuermoduls, wobei zumindest einige der Leiterbahnen der Zündeinheit im Material des Trägers integriert sind. Auf diese Weise können zumindest die Anschlüsse einiger elektrischer Komponenten der Zündeinheit robust und zuverlässig innerhalb des Materials des Trägers vorgesehen werden, so dass ein höherer Grad an Flexibilität bei der Gesamtgestaltung des Trägers im Hinblick auf die Aufnahme weiterer elektrischer Komponenten, die zum kontinuierlichen Betreiben der Gasentladungsleuchte dienen, gegeben ist.

In einer weiteren Ausführungsform ist eine zweite Funktionsgruppe mit weiteren elektrischen Komponenten vorgesehen, von denen zumindest einige auf der Leiterplatte montiert sind, die über an dem Träger fixierten Verbindungen mit der Zündeinheit verbunden ist. Dieser modulare Aufbau ermöglicht eine unabhängige Herstellung des Ansteuermoduls einerseits, d. h. des Trägers mit dem Zündtransformator und einigen elektrischen Komponenten, und der Leiterplatte andererseits, wobei durch die Verbindungen eine schnelle robuste effiziente Kopplung der elektrischen Komponenten während der Endmontage möglich ist. Dabei können zumindest einige der Verbindungen lötfreie Verbindungen sein, was ebenfalls zu einem geringeren Aufwand bei der Montage beiträgt. Die Leiterplatte ist in einer Ausführungsform als ein spritzgegossener Schaltungsträger (MID) ausgebildet, wodurch sich ein hoher Grad an Flexibilität bei der Auswahl der Materialien für die Leiterplatte sowie die Leiterbahnen, die darauf und darin hergestellt sind, ergibt. In anderen Ausführungsformen kann ein Teil der Leiterplatte in Form des Trägermaterials bereitgestellt werden, so dass bereits mehrere elektrische Komponenten, die einen höheren Aufwand oder Platzbedarf bei der Bestückung von separaten Leiterplatten erfordern, bereits an dem Träger im Rahmen der Montage des Zündtransformators sowie weiterer elektrischer Komponenten der Zündeinheit angebracht werden. Beispielsweise können größere Komponenten, etwa Induktivitäten, weitere Transformatoren, und dergleichen geeignet an dem Träger befestigt und auf oder in dem Träger bereits verdrahtet werden. Bei Bedarf wird die Kontur des Trägers einer oder mehreren dieser weiteren elektrischen Komponenten so angepasst, dass sich eine hohe Vibrationsbeständigkeit ergibt, wie dies bereits zuvor erläutert ist. Die Leiterplatte und der Träger können jeweils in ihrer Gestalt aufeinander angepasst werden, so dass sich ein kompaktes Bauvolumen und die erforderliche mechanische und elektrische Robustheit ergeben, wobei auch die thermischen Bedingungen sich so einstellen, dass keine unzulässig hohen Temperaturen lokal hervorgerufen werden. Beispielsweise kann die Leiterplatte mindestens zwei zueinander angewinkelte Leiterplattenbereiche aufweisen, so dass die Aufteilung der elektrischen Komponenten zur Steuerung des Zündvorgangs, zur Steuerung des kontinuierlichen Betriebs, und dergleichen auch in einer "dreidimensionalen" Weise erfolgen kann.

In weiteren Ausführungsformen ist ein Abschirmmaterial zwischen Leiterbahnen der Leiterplatte und dem Zündtransformator angeordnet, so dass der Grad an elektromagnetischer Beeinflussung, etwa durch den Zündtransformator zum Zeitpunkt des Zündens oder auch während des kontinuierlichen Betriebs, wenn eine getaktete Spannung der Entladungsleuchte über den Zündtransformator zugeführt wird, verringert wird. Dabei kann das Abschirmmaterial gezielt magnetische Störungen abschirmen oder auch in Form eines leitenden Materials vorgesehen sein. In einer Ausführungsform ist das Abschirmmaterial, etwa in Form eines Ferritmaterials, ein Bestandteil der Leiterplatte.

In weiteren Ausführungsformen ist zumindest eine weitere elektrische Komponente, die nicht Bestandteil der Zündeinheit ist, direkt an dem Träger fixiert, wobei dies so erfolgen kann, dass ein hoher Grad an Vibrationsbeständigkeit gewährleistet ist, wie dies bereits auch zuvor beschrieben wurde. In einer Ausführungsform ist diese weitere elektrische Komponente ein induktives Bauelement, etwa eine Spule oder ein Transformator, wie dies zum Bereitstellen einer geeigneten Wechselspannung oder Gleichspannung zum kontinuierlichen Betrieb der Entladungsleuchte erforderlich ist.

In einer weiteren Ausführungsform ist der Leuchtensockel zur Aufnahme einer Entladungsleuchte mit einer elektrischen Leistung von Bereich von 15 bis 60 Watt geeignet. Durch diese Ausbildung ist das Ansteuermodul für die Verwendung in Scheinwerfern in mobilen Geräten, in Fahrzeugen, und dergleichen gut geeignet, wobei es sich aufgrund des kompakten Aufbaus ein Bauvolumen von ca. 60 cm³ oder deutlich darunter ergibt.

Ferner wird ein Verfahren zur Herstellung eines Ansteuermoduls für eine Entladungsleuchte beschrieben. Das Verfahren umfasst den Schritt des Verbindens einer Leiterbahn, die teilweise im Kunststoffmaterial eines Leuchtensockels integriert ist, mit einem Zündtransformator einer Zündeinheit des Ansteuermoduls. Des Weiteren wird der Zündtransformator in eine Vergusskammer nach dem Verbinden eingebracht, wobei die Vergusskammer an einem Träger des Ansteuermoduls angebracht ist. Daraufhin wird die Vergusskammer mit einem Vergussmaterial gefüllt. Aufgrund des Verfahrens zur Herstellung des Ansteuermoduls wird damit zunächst eine Verbindung zwischen dem Zündtransformator und dem Leuchtensockel hergestellt, wobei dies mit ausreichendem räumlichen Abstand zu dem eigentlichen Träger und insbesondere zu der Vergusskammer stattfindet, so dass die nachteiligen Auswirkungen des Herstellens der Hochspannungsverbindung, etwa durch Schweißen, durch Löten, und dergleichen, zuverlässig vermieden werden können. Das heißt, die eingangs genannten Schwierigkeiten, beispielsweise aufgrund der Schmauchbildung, etc., die konventionellerweise zur Kontamination der Vergusskammer eines Zündtransformators führen, werden vermieden, indem die Verbindung nicht in der Nähe der Vergusskammer ausgeführt wird und diese erst nach erfolgter Verbindung mit dem Zündtransformator bestückt wird.

Dazu kann in einer anschaulichen Ausführungsform das Einbringen des Zündtransformators in eine Vergusskammer auch das mechanische Fixieren des Leuchtensockels an dem Träger außerhalb der Vergusskammer vor dem Füllen der Vergusskammer beinhalten, so dass dadurch bereits eine ausreichende mechanische Fixierung für das Vergießen des Zündtransformators gegeben ist. Die Befestigung des Leuchtensockels am Träger kann dabei durch Kleben, Heißverstemmen, Warmgasnieten, durch Pressverbindung, etc. bewerkstelligt werden.

In einer weiteren vorteilhaften Ausführungsform erfolgt das mechanische Fixieren des Leuchtensockels derart, dass ein Durchlass in der Vergusskammer zum Durchführen einer Leiterbahn abgedichtet wird. In einer derartigen Ausführungsform wird somit eine Verbindung von der Vergusskammer zum restlichen Träger vorgesehen, so dass ein Teil der Verbindung des Leuchtensockels zum Zündtransformator in diesem Durchlass aufgenommen wird. Dazu kann die Verbindung in einem geeigneten Kunststoffmaterial eingebettet sein, das gleichzeitig als ein Verschluss für den Durchlass dient.

In einer weiteren vorteilhaften Ausführungsform umfasst das Verfahren das Erzeugen einer oder mehrerer Verbindungsleiterbahnen zum Verbinden von elektrischen Komponenten in einer oder mehreren Kunststoffwänden des Trägers. Auf diese Weise werden zumindest einige der erforderlichen elektrischen Verbindungen in platzsparender und reproduzierbarer Weise vorgesehen. In einer Ausführungsform sind dabei Aussparungen in der einen oder den mehreren Kunststoffwänden des Trägers vorgesehen. Damit können die erforderlichen Leiterbahnen nach der Herstellung des Trägers eingelegt und gegebenenfalls mittels geeigneter Verbindungstechnologien, z.B. Heißverstemmen, etc., fixiert werden. Daraus ergeben sich im Vergleich zu Trägern mit integrierten Leiterbahnen, geringere Werkzeugkosten, da kein teures Inline-Einspritzverfahren für die Leiterbahnen erforderlich ist. Der Träger kann damit beispielsweise in Form eines Gehäuses ohne Metalleinlegeteil aus einem Zwei-Plattenwerkzeug hergestellt werden, woraus sich ebenfalls deutliche Kostenvorteile ergeben.

In einer weiteren Ausführungsform umfasst das Verfahren das Integrieren eines Materials in das Kunststoffmaterial des Trägers, um die Abschirmwirkung und/oder die Wärmeleitfähigkeit zu erhöhen. Das heißt, es können geeignete Leiter, Ferritmaterialien, und allgemein Metall enthaltende leitende oder nicht leitende Materialien zur Verbesserung der Wärmeleitfähigkeit, in gewünschter Weise eingebracht werden. In einigen Ausführungsformen werden dabei diverse Funktionsschichten im Material des Trägers vorgesehen, etwa eine Leiterbahn oder eine Metallfolie, die somit zu einer höheren Wärmeleitfähigkeit beiträgt, so dass lokal entstehende Wärme, etwa in der Nähe des Leuchtensockels, effizient über das gesamte Gehäuse oder zumindest einem großen Teil davon verteilt werden kann, wodurch die entstehende Verlustwärme ohne weitere aufwändige Maßnahmen abgeführt werden kann. In anderen Fällen können Ferritmaterialien in Verbindung mit leitenden Materialien als Schichtaufbau vorgesehen werden, so dass sich eine effiziente elektrische und magnetische Abschirmung ergibt, wobei auch die Wärmeleitfähigkeit deutlich verbessert werden kann.

Noch weitere Ausführungsbeispiele sind auch in den Unteransprüchen definiert und gehen auch aus der folgenden detaillierten Beschreibung hervor, die mit Bezug zu den begleitenden Figuren angegeben ist, wobei:

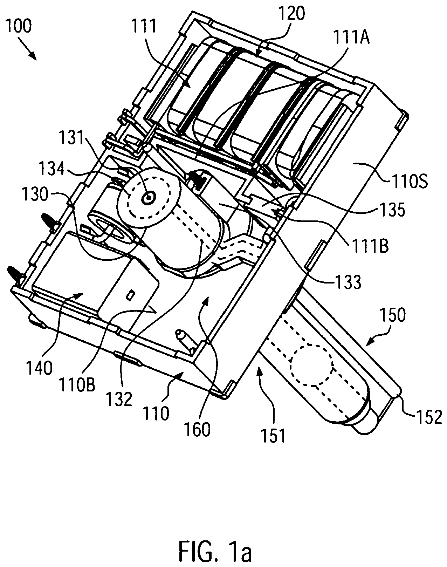

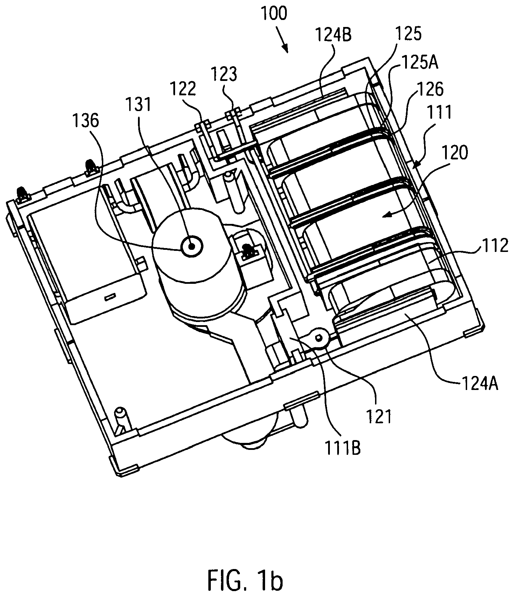

- Fig. 1A und Fig. 1B: perspektivische Ansichten eines erfindungsgemäßen Ansteuermoduls zeigen

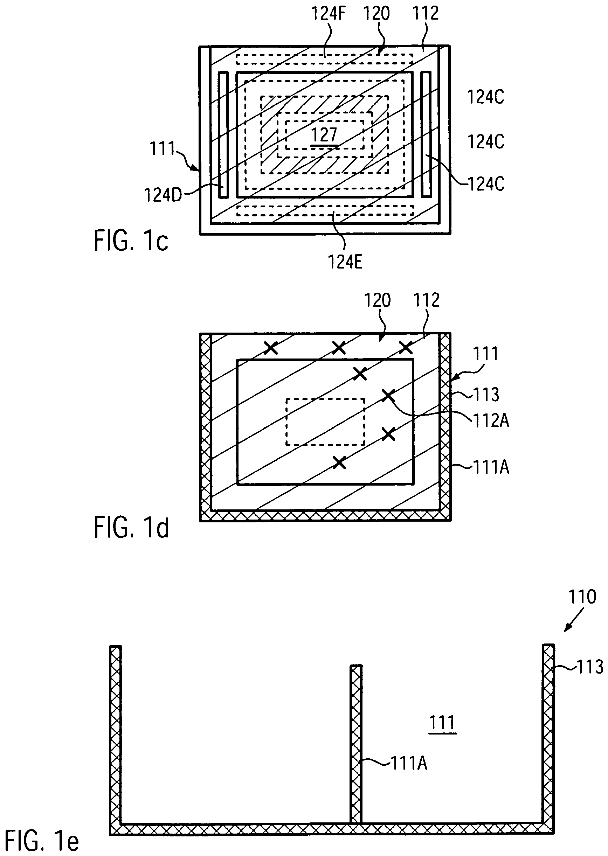

- Fig. 1C bis 1F: Querschnittsansichten des Ansteuermoduls bzw. eines Teils davon zeigen,

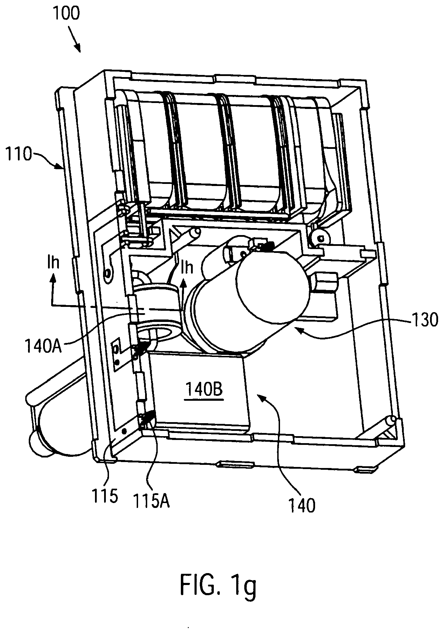

- Fig. 1G: schematisch eine perspektivische Ansicht darstellt,

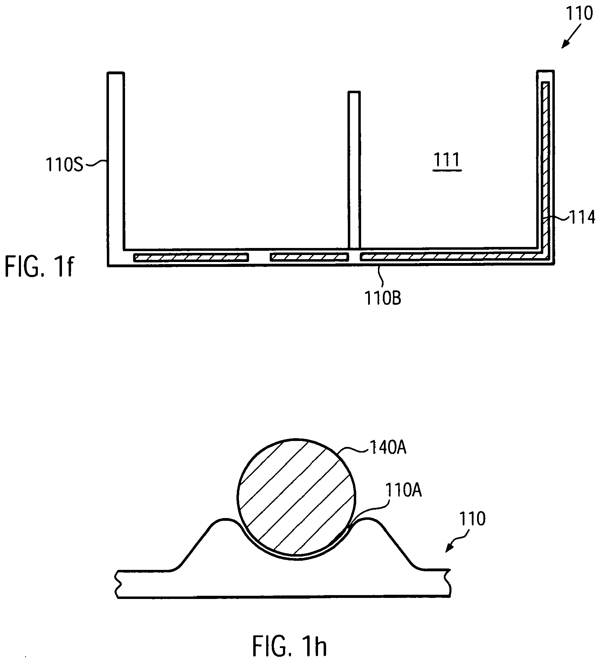

- Fig. 1H: eine Schnittansicht gemäß der Fig. 1G zeigt, in der die Kontur des Trägers der Kontur eines elektrischen Bauelements nachgebildet ist,

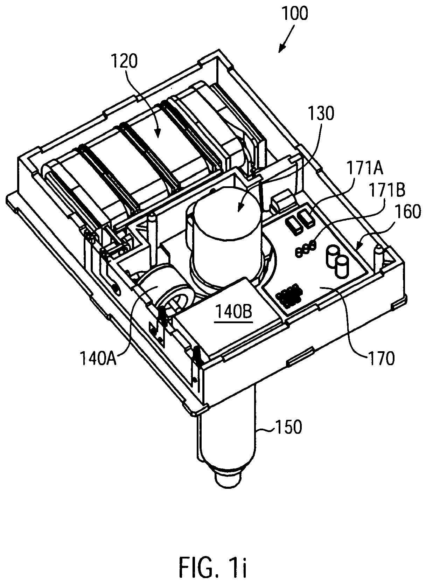

- Fig. 1I: schematisch eine perspektivische Ansicht des Ansteuermoduls mit der Platine gemäß der Erfindung zeigt und

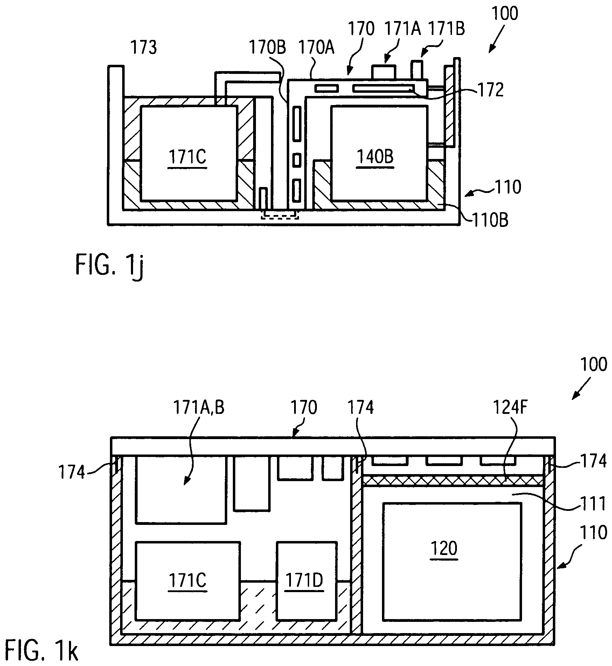

- Fig. 1J und 1K: Querschnittsansichten des Ansteuermoduls gemäß weiterer anschaulicher Ausführungsformen zeigen, in denen zusätzliche Komponenten am Träger angebracht sind und ferner eine Platine vorgesehen ist.

Fig. 1A zeigt eine perspektivische Ansicht eines Ansteuermoduls 100 in Kombination mit einer Gasentladungsleuchte 150. In der gezeigten Ausführungsform ist das Ansteuermodul 100 geeignet dimensioniert, um Gasentladungsleuchten 150 für Leistungen von etwa 60 Watt oder weniger zu betreiben. Für diesen Leistungsbereich der Gasentladungsleuchte 150 gibt es Anwendungen in einer Vielzahl von mobilen Geräten, in Scheinwerfern von Fahrzeugen, etc. Das Ansteuermodul 100, das in dem gezeigten Fertigungsstadium zumindest die erforderlichen Komponenten zum Zuführen von Energie zum Zünden der Gasentladungsleuchte aufweist, umfasst einen Träger 110, der beispielsweise in Form eines Gehäuses oder einer anderen geeigneten Konfiguration eines Trägers zur Aufnahme elektrischer Komponenten zum Zünden und zum Betreiben der Gasentladungsleuchte 150 vorgesehen ist. Ferner sind an dem Träger 110 ein Hochspannungszündtransformator 120, ein Leuchtensockel 130 und eine oder mehrere weitere elektrische Komponenten 140 angebracht. Der Träger 110 umfasst ferner einen Bereich 160, der zur Aufnahme weiterer elektrischer Komponenten geeignet ist, während in anderen anschaulichen Ausführungsformen, wie dies nachfolgend detaillierter erläutert ist, auch weitere elektrische Komponenten einer Funktionsgruppe vorgesehen sind, beispielsweise direkt am Träger 110 fixiert, oder es ist eine geeignete Platine für weitere elektrische Komponenten im Bereich 160 vorgesehen.

Der Träger 110 weist in der gezeigten Ausführungsform Seitenteile 110S und eine Grundplatte 110B auf, die zumindest teilweise aus Kunststoff aufgebaut sind. Der Träger 110 in Form der Seitenflächen 110S und der Grundplatte 110B umschließt somit ein geeignetes Volumen, das für den oben angegebenen Leistungsbereich der Entladungsleuchte 150, etwa 60 cm³ oder deutlich weniger beträgt, in welchem alle zum Zünden und Betrieb der Gasentladungsleuchte 150 erforderlichen elektrischen Komponenten angeordnet sind oder in einer späteren Fertigungsphase vorgesehen werden können, mit Ausnahme einer Verbindung zum Anschluss an eine Energiequelle, etwa das Versorgungsnetz eines Fahrzeuges, und dergleichen. Eine entsprechende Anbindung (nicht gezeigt) des Ansteuermoduls 100 an eine Energiequelle kann dabei über beliebige geeignete Verbindungen, etwa Kabel, und dergleichen sowie auch über eine induktive Ankopplung erfolgen.

Der Träger 110 umfasst ferner eine Vergusskammer 111, in der der Transformator 120 zusammen mit einem in Fig. 1A nicht gezeigten Vergussmaterial enthalten ist. In der gezeigten Ausführungsform besitzt die Vergusskammer 111 eine Kammerwand 111A, die den Transformator 120 von dem Leuchtensockel 130 trennt, wobei jedoch eine Durchführung 111B in der Kammerwand 111A vorgesehen ist. Der Durchlass 111B ist in der gezeigten Ausführungsform durch eine Abdichtplatte 135 abgedichtet, wie dies zum Vergießen des Transformators 120 in der entsprechenden Montagephase erforderlich ist. Die Abdichtplatte 135 kann ein Bestandteil des Leuchtensockels 130 sein, der aus einem hochtemperaturfesten Kunststoff aufgebaut ist, der bei Temperaturen von größer 105°C formstabil bleibt und eine geringe oder keine Ausgasung besitzt, und in anschaulichen Ausführungsformen auch bei Temperaturen im Bereich von 150°C bis ca. 200°C beständig ist. Zu diesem Zweck können Kunststoffmaterialien wie PPS, LCP, und dergleichen verwendet werden. Im Zusammenhang mit der vorliegenden Anwendung ist der Leuchtensockel 150 als ein Bereich zu verstehen, in welchem zumindest ein hochspannungsführender Anschluss 151 der Gasentladungsleuchte 150 eingeführt wird, um damit die elektrische Verbindung des Anschlusses 151 mit elektrischen Komponenten, die an dem Träger 110 angebracht sind, etwa mit dem Zündtransformator 120, herzustellen. Die eigentliche mechanische Fixierung der Gasentladungsleuchte 150 kann jedoch durch eine weitere Komponente erfolgen, die an dem Träger 110 angebracht ist, etwa auf der der Gasentladungsleuchte 150 zugewandten Seite der Grundplatte 110B, wobei diese Befestigungskomponente (nicht gezeigt) aus einem beliebigen geeigneten Material aufgebaut sein kann. Der Leuchtensockel 130 enthält als integrales Bestandteil eine Leiterbahn 132, die eine Verbindung zu einem Hochspannungsanschluss 131 des Leuchtensockels und einem Hochspannungsanschluss (in Fig. 1 b gezeigt) des Transformators 120 herstellt. Dabei kann die Leiterbahn 132, die in der gezeigten Ausführungsform, nahezu vollständig im Material des Leuchtensockels 130 verlaufen und eine entsprechende Verbindungsstelle kann innerhalb der Vergusskammer 111 liegen, wie dies nachfolgend mit Bezug zu Fig. 1B beschrieben ist. In diesem Falle sind die Abdichtplatte 135 und das entsprechende Material des Leuchtensockels 130, das die Leiterbahn 132 umschließt, als integrale Komponenten des Leuchtensockels 130 zu betrachten, so dass bei einer Montage des Leuchtensockels 130 an dem Träger 110 gleichzeitig eine Abdichtung der Vergusskammer 111 aufgrund des Einfügens der Abdichtplatte 135 in die Durchführung 111B der Kammerwand 111A erfolgt. In der gezeigten Ausführungsform weist der Leuchtensockel 130 auch einen Niederspannungsanschlussbereich 133 auf, der somit ebenfalls teilweise im Kunststoffmaterial des Leuchtensockels 130 integriert ist und einen geeigneten Kontaktbereich besitzt, etwa in Form eines Pressstiftkontakts, eines Lötstiftes, eines Schweißstiftes, und dergleichen. Mittels des zugehörigen Kontakts des Anschlussbereichs 133 kann eine elektrische Verbindung zu einer Leiterplatte effizient hergestellt werden, die weitere elektrische Komponenten aufweist. In anderen Ausführungsformen verläuft eine entsprechende Leitung für die Niederspannungsseite der Gasentladungsleuchte 150 über geeignete Leiterbahnen, die eine Verbindung zu einer oder mehreren der elektrischen Komponenten 140, den Zündtransformator 120, oder dergleichen herstellen.

Die Abdeckung des Anschlussbereichs 131 des Leuchtensockels erfolgt über einen Hochspannungsdeckel 134, um eine Vergießen nach der Kontaktierung des Bereichs zu vermeiden. In anderen Fällen ist der Leuchtensockel 130 mit einem Vergussbereich versehen, der ein Vergießen während einer späteren Phase nach der Montage der Entladungsleuchte ermöglicht, wenn eine reduzierte Koronabildung erforderlich ist.

Fig. 1B zeigt schematisch das Ansteuermodul 100 in einer weiteren perspektivischen Ansicht, in der ein Hochspannungsanschlussbereich 121 des Zündtransformators 120 innerhalb der Vergusskammer 111 gezeigt ist, wobei der Anschlussbereich 121 sowie der Zündtransformator 120 in einem Vergussmaterial 112 eingebettet sind, so dass eine hohe mechanische und elektrische Robustheit gewährleistet ist. Auch ist ein Vergussbereich 136 dargestellt, der in einer späteren Phase mit Vergussmaterial befüllt wird, um die den Anschlussbereich 131 hochspannungsfest zu versiegeln. Ferner sind in der Fig. 1B weitere Anschlussbereiche 122 und 123 des Zündtransformators 120 dargestellt, die etwa den Anschlüssen einer Primärwicklung und einem der Anschlüsse einer Sekundärwicklung des Transformators 120 entsprechen. Es ist jedoch zu beachten, dass eine beliebige Verschaltung von Primär- und Sekundärwicklungen im Zündtransformator 120 entsprechend der erforderlichen elektrischen Anordnung möglich ist.

Der Zündtransformator 120 entspricht in der gezeigten Ausführungsform einem stabförmigen Transformator mit einem Kernmaterial (nicht gezeigt), das somit keinen geschlossenen magnetischen Kreislauf innerhalb des Kernmaterials aufweist. Dem gegenüber ermöglicht die stabförmige Ausführung einen sehr kompakten Aufbau und auch ein gutes Verhalten im Hinblick auf ein Bewickeln eines entsprechenden Spulenkörpers (nicht gezeigt), so dass sich eine platzsparende und präzise Bewicklung des Transformators 120 ergibt. In der gezeigten Ausführungsform ist der zur Verfügung stehende Wickelraum für eine Sekundärwicklung durch Kammertrennwände 125 unterteilt. Ferner sind in den Kammertrennwänden 125 Aussparungen 125A vorgesehen, in der ein Wicklungsdraht 126 aufgenommen werden kann, so dass zumindest in lateraler Richtung eine zuverlässige elektrische Isolation des Wicklungsdrahtes 126 aufgrund der Kammerwände 125 erreicht wird. Auf diese Weise können eine oder mehrere Windungen je Kammerwand 125 auf der Grundlage eines kostengünstigen Wicklungsdrahtes vorgesehen werden, der beispielsweise nur eine einfache Isolierung besitzen oder gegebenenfalls ganz ohne Isolierung aufgebracht werden im Gegensatz zu vielen konventionellen Transformatoren, in denen die Primärwicklung mittels eines mehrfach isolierten und damit sehr kostenintensiven Wicklungsdrahtes verwirklicht wird, um die erforderliche Spannungsfestigkeit zur Sekundärwicklung zu verwirklichen. Durch die präzise definierte Lage der Primärwicklungsdrähte 126 in den Kammerwänden 125 ergibt sich auch eine bessere Kopplung der Primärwicklung und der Sekundärwicklung, was ebenfalls zu einem günstigeren elektrischen Verhalten beiträgt, da etwa die Sekundärwicklung mit einer geringeren Anzahl an Windungen und damit mit einem geringeren Platzbedarf oder einem geringeren ohmschen Widerstand ausgeführt werden kann. Bei Vorsehen zweier oder mehrerer Windungen in jeder der Kammertrennwände 125 kann auch eine Parallelverschaltung von zwei oder mehreren Primärwicklungen erreicht werden, wodurch sich insgesamt das Kopplungsverhalten noch besser gestaltet.

In anderen Ausführungsformen (nicht gezeigt) sind die Primärwindungen 126 zumindest teilweise im Material eines entsprechenden Spulenkörpers integriert, beispielsweise in den Kammerwänden 125, so dass nach dem Vergießen des Transformators 120 eine ausgezeichnete Hochspannungsisolationsfestigkeit erreicht wird, wobei auch eine sehr gute Bauteilgleichmäßigkeit der Zündtransformatoren erreicht wird, da die Position der Primärwicklungen durch konstruktive Maßnahmen, d. h. durch das Spritzgießen der Wicklungsabschnitte, vorgegeben ist. In weiteren Ausführungsformen kann die Primärwicklung in Form eines Leiterbandes aufgebracht werden, wobei ein entsprechender Abstand zur Sekundärwicklung etwa durch die Trennwände 125 erfolgen kann im Zusammenwirken mit dem Vergussmaterial 112, so dass auch in diesem Falle eine günstige Bauhöhe des Transformators 120 aufgrund der geringen Dicke des Leiterbandes erreicht wird, während auch die Kopplung verbessert ist.

In der gezeigten Ausführungsform ist stirnseitig am Zündtransformator 120 jeweils eine Ferritplatte 124A bzw. 124B angebracht, so dass sich insgesamt ein besseres magnetisches Verhalten erreichen lässt, während negative Einflüsse von möglichen leitenden Komponenten, etwa leitenden Abschirmmaterialien, und dergleichen, reduziert werden, die ansonsten über entsprechende Wirbelstromverluste in diesen leitenden Materialien zu einer geringeren Ausgangsspannung des Zündtransformators 120 beitragen könnten. Durch das Vorsehen der Ferritplatten 124A, 124B ergibt sich somit trotz des nicht geschlossenen Aufbaus des Transformatorkerns ein gutes magnetisches Verhalten, wobei in Verbindung mit der kompakten Gestalt und mit den zuvor genannten Eigenschaften Im Hinblick auf das Anbringen der Primärwicklung insgesamt eine gewünschte hohe Ausgangsspannung, etwa im Bereich von 20000 bis 30000 Volt erreicht wird. Dabei besitzt die Sekundärwicklung einen ausreichend geringen Ohmschen Widerstand, so dass Energie nach dem Zünden ohne größere Verlust der Entladungsleuchte über die Sekundärseite als direkter Strompfad von einer Vorschalteinrichtung zugeführt werden kann.

Das Ansteuermodul 100, wie es in den Fig. 1A und 1B gezeigt ist, kann in der folgenden Weise hergestellt werden. Zunächst werden der Leuchtensockel 130 und der Zündtransformator 120 über den Verbindungsbereich 121 (siehe Fig. 1B) miteinander verbunden, wobei dies durch Laserschweißen, Widerstandschweißen, Lichtbogenschweißen, etc. erfolgen kann, wobei der Anschlussbereich 121 sowie die Leiterbahn 132 aus geeigneten Materialien aufgebaut sind, so dass diese als Schweißpartner für die jeweilige Verbindungstechnik fungieren. Da das Verbinden der Leiterbahn 132 mit dem Zündtransformator 120 außerhalb der Vergusskammer 111 erfolgt, findet auch eine entsprechende Kontamination der Kammerwände nicht statt. Daraufhin wird die Funktionsgruppe bestehend aus dem Leuchtensockel 130 in Verbindung mit dem Zündtransformator 120 auf den Träger 110 aufgebracht, d. h. der Transformator 120 wird in die Vergusskammer 111 eingeführt, wobei auch gleichzeitig der Leuchtensockel 130 geeignet positioniert wird. Wie zuvor beschrieben ist, ist in einigen Ausführungsformen die Abdichtplatte 135 (siehe Fig. 1A) vorgesehen, so dass auch eine Abdichtung der Vergusskammer 111, d. h. des Durchlasses 111B, erfolgt. In einigen anschaulichen Ausführungsformen ist die Platte 135 ein integraler Bestandteil des Leuchtensockels 130, während in anderen Ausführungsformen die Platte 135 separat aufgebracht wird, wenn etwa eine mögliche Kontamination der Abdichtplatte 135 beim Verbinden des Bereichs 121 mit der Leiterbahn 132 als ungeeignet erachtet wird. Der Leuchtensockel 130 kann an dem Träger 110, d. h. an der Grundplatte 110B, durch Kleben, Heißverstemmen, Warmgasnieten, Pressverbinden, etc. befestigt werden. Daraufhin wird die Vergusskammer 111 mit Vergussmaterial gefüllt und entsprechend ausgeheizt, um damit durch Aushärten des Vergussmaterials den Zündtransformator 120 in zuverlässiger Weise zu fixieren und die Isolationsflüssigkeit zu verbessern. Dabei kann durch die offene Bauweise des Zündtransformators 120 das Vergussmaterial effizient in die einzelnen Bereiche des Transformators 120 eindringen, so dass ein schneller und lunkerfreier Vakuumverguss begünstigt wird. In einigen Ausführungsformen kann vor dem eigentlichen Einfüllen des Vergussmaterials eine Benetzung der Abdichtplatte 135 erfolgen, so dass bei einer ersten Aushärtung der benetzten Bereiche zunächst eine erhöhte Dichtigkeit der Abdichtplatte hergestellt wird, woraufhin sich dann das eigentliche ausgießen der Vergusskammer 111 anschließt.

Bei dem zuvor beschriebenen Verfahren zur Herstellung des Ansteuermoduls 100 werden die einzelnen Komponenten, d. h. der Zündtransformator 120, der Träger 110 und der Leuchtensockel 130 in geeigneter Weise separat hergestellt und nachfolgend miteinander verbunden. Dabei erfolgt die Herstellung des Leuchtensockels 130 auf der Grundlage geeigneter hochtemperaturfester Kunststoffe, wie dies zuvor erläutert ist, während auch bei der Herstellung des Trägers 110 geeignete Spritzgussverfahren eingesetzt werden, wobei zusätzliche Materialien in das Kunststoffmaterial eingebracht werden können, wie dies auch nachfolgend detaillierter beschrieben ist. Auch der Aufbau des Zündtransformators 120 kann in effizienter Weise mit hohem Automatisierungsgrad erfolgen aufgrund des zuvor genannten Aufbaus.

Fig. 1C zeigt schematisch eine Querschnittsansicht der Vergusskammer 111 mit dem Zündtransformator 120. In der dargestellten Ausführungsform ist der Zündtransformator 120 in dem Vergussmaterial 112 eingebettet und weist einen Kern 127 auf, auf dem mittels eines beliebigen geeigneten Spulenkörpers eine Sekundärwicklung 128 in Verbindung mit der Primärwicklung 126 vorgesehen ist. Wie zuvor erläutert ist, sind zumindest Bereiche der Primärwindungen 126 teilweise in einem Kunststoffmaterial des Spulenkörpers integriert, beispielsweise durch Vorsehen von entsprechenden Aussparungen in Trennwänden, wie dies zuvor erläutert ist, oder Teile der Primärwicklung 126 können auch vollständig im Kunststoffmaterial des Spulenkörpers integriert sein. Ferner ist in der gezeigten Ausführungsform zumindest eine weitere Ferritplatte in unmittelbarer zu dem Zündtransformator 120 innerhalb der Vergusskammer 111 vorgesehen. Beispielsweise kann eine Ferritplatte 124D und/oder eine Ferritplatte 124C und/oder eine Ferritplatte 124E und/oder eine Ferritplatte 124F zusätzlich oder alternativ zu den zuvor in Fig. 1B gezeigten Ferritplatten 124A, 124B vorgesehen werden. Auf diese Weise können die magnetischen Eigenschaften flexibel eingestellt werden, ohne dass damit eine ausgeprägte Zunahme des gesamten Bauvolumens verknüpft ist.

Fig. 1D zeigt schematisch eine Querschnittsansicht der Vergusskammer 111 gemäß einer weiteren Ausführungsform, in der ein Ferritmaterial 112A in der Vergussmasse 112 enthalten ist und/oder ein Ferritmaterial 113 zumindest teilweise in Wänden 111A der Vergusskammer 111 enthalten ist. Auf diese Weise kann ein gewünschtes Abschirmverhalten und eine Verbesserung der magnetischen Eigenschaften erreicht werden, ohne dass eine Vergrößerung des Bauvolumens erforderlich ist. Das Ferritmaterial 113 kann in das Material der Wände 111A beim Herstellen des Trägers 110 eingebracht werden durch Hinzufügen entsprechender Ferritmaterialien in die Spritzgussmasse oder es können geeignete Schichten oder Folien beim Spritzgussverfahren in die Spritzgussform eingebracht werden, so dass das Material 113 in lokal begrenzter Weise innerhalb der Wände 111A vorhanden ist.

Fig. 1E zeigt schematisch eine Querschnittsansicht des Trägers 110, wobei das Ferritmaterial 113 über weite Bereiche hinweg vorgesehen ist, beispielsweise im gesamten Kunststoffmaterial des Trägers 110, so dass eine magnetische Abschirmung für den gesamten Träger 110 erreicht wird, während auch lokal eine Abschirmwirkung, etwa im Hinblick auf die Vergusskammer 111 zu den anderen Bereichen des Trägers 110 erfolgt. Das integrierte Ferritmaterial 113 kann auch zu einer verbesserten Wärmeleitfähigkeit des Kunststoffbasismaterials des Trägers 110 beitragen, das in Form eines beliebigen geeigneten und kostengünstigen Materials vorgesehen werden kann, so dass eine effiziente Wärmeverteilung von einem Punkt mit lokal erhöhter Temperatur, etwa in der Nähe des Leuchtensockels, zu periphereren Bereichen des Trägers 110 erfolgen kann. Auf diese Weise kann ein großer Teil oder die gesamte Oberfläche des Trägers 110 als eine "Kühlfläche" dienen, so dass gegebenenfalls weitere Maßnahmen, etwa in Form von Oberflächenrippen, und dergleichen nicht erforderlich sind.

Fig. 1F zeigt schematisch eine Querschnittsansicht des Trägers 110 gemäß weiterer Ausführungsformen, in denen zusätzlich oder alternativ zu dem Material 113 (siehe Fig. 1E) ein Material 114 in lokal begrenzter Weise bezüglich der Schichtdicke der Seitenwände 110S bzw. der Grundplatte 110B vorgesehen ist. Beispielsweise repräsentiert das Material 114 ein elektrisch leitendes Material, um eine entsprechende elektromagnetische Abschirmung zu erreichen, wobei, wie zuvor dargelegt ist, ein Ferritmaterial für eine magnetische Abschirmung insbesondere der Vergusskammer 111 sorgen kann, um entsprechende Wirbelstromverluste in dem Material 114 zu verringern. Das Material 114 kann auch in Form eines thermisch gut leitenden Materials vorgesehen werden, beispielsweise als leitendes Material oder als nicht leitendes Material, so dass sich eine gut Verteilung der Abwärme erreichen lässt, wie dies auch zuvor erläutert ist. In anschaulichen Ausführungsformen kann zumindest ein Teil des Materials 114 in Form von Metallbahnen vorgesehen werden, die auch als elektrische Verbindungen zwischen den einzelnen elektrischen Komponenten verwendet werden.

In den zuvor dargestellten Ausführungsformen können die Materialien 113 und 114 während des Spritzgießens des Trägers 110 eingebracht werden, so dass die thermischen und/oder elektrischen und/oder magnetischen Eigenschaften in gut reproduzierbarer Weise eingestellt werden können.

Fig. 1G zeigt eine perspektivische Ansicht des Ansteuermoduls 100, in der elektrisch Leiterbahnen 115 im Material des Trägers 110 vorgesehen sind. Beispielsweise können die Leiterbahnen 115 Teile des in Fig. 1F gezeigten Materials 114 repräsentieren, wenn dieses in Form eines geeigneten Leiters bei der Herstellung des Trägers 110 eingebracht wird. In anderen Ausführungsformen werden die Leiterbahnen 115 speziell beim Spritzgussverfahren an geeigneten Positionen in das Material des Trägers 110 integriert, ohne dass damit weitere Funktionen, etwa Abschirmung, Wärmeleitung und dergleichen beabsichtigt sind. In einer Ausführungsform wird der Träger 110 so hergestellt, dass die Leiterbahnen 115 in einem separaten Herstellungsschritt eingebracht werden können. Dazu werden gegebenenfalls geeignete Aussparungen im Träger 110 an den gewünschten Positionen vorgesehen, so dass das Kunststoffbasismaterial des Trägers 110 unter Anwendung effizienter und kostengünstiger Spritzgussverfahren hergestellt werden kann, wobei dennoch die Position der Leiterbahnen 115 in präziser Weise festgelegt ist. Vor oder nach der Montage der elektrischen Komponenten 140 können dann die Leiterbahnen 115 eingelegt werden und bei Bedarf mechanisch fixiert werden, wozu sich beliebige geeignete Verfahren eignen, etwa das Heißverstemmen, etc. Die Leiterbahnen 115 sind bei Bedarf mit Anschlussbereichen 115A versehen, so dass eine Kontaktierung weiterer Komponenten, etwa einer Leiterplatte, und dergleichen, ohne zusätzliches Löten erfolgen kann.

Für die Montage der elektrischen Komponenten 140, die im Zusammenwirken mit dem Zündtransformator 120 und den Leiterbahnen 115 eine Zündeinheit repräsentieren, erfolgt in einer Ausführungsform eine mechanische Fixierung der Komponenten 140 an dem Träger 110 derart, dass eine hohe Vibrationsbeständigkeit erreicht wird. Dazu ist der Träger 110 bereichsweise in seiner Kontur der Kontur der elektrischen Komponenten 140, etwa der Kontur eines Kondensators 140B und/oder einer Funkenstrecke 140A geeignet angepasst, so dass sich, gegebenenfalls mit zusätzlicher Fixierung durch Silikon, Kleber, etc., die gewünschte mechanische Robustheit ergibt.

Fig. 1H zeigt schematisch eine Querschnittsdarstellung gemäß dem Schnitt IH aus Fig. 1G, wobei ein Teil des Trägers 110 eine Kontur 110A aufweist, die der Kontur der Funkenstrecke 140A nachgebildet ist, so dass sich bereits nach erfolgter Montage und Kontaktierung mit den Leiterbahnen eine entsprechende mechanische Stabilität ergibt, die gegebenenfalls durch Vorsehen von weiteren Materialien verbessert werden kann. Die Vibrationsbeständigkeit insbesondere der größeren elektrischen Komponenten, etwa der Funkenstrecke 140A und des Kondensators 140B (siehe Fig. 1G) ist insbesondere bei der Verwendung im Fahrzeugbereich von großer Bedeutung, da die Zuverlässigkeit des Ansteuermoduls wesentlich von der korrekten und zuverlässigen Funktion dieser Komponenten abhängt.

Fig. 1I zeigt schematisch das erfindungsgemäße Ansteuermodul 100, in der im Raumbereich 160 eine Leiterplatte 170 vorgesehen ist, auf der weitere elektrische Komponenten 171A, 171B angeordnet sind. Die Komponenten 171A, 171B repräsentieren elektrische Komponenten, die für eine weitere Funktionsgruppe des Moduls 100 erforderlich sind, insbesondere für das Betreiben der Entladungsleuchte im kontinuierlichen Betrieb, zur Steuerung des Zündens, etc., so dass in einer anschaulichen Ausführungsform ein autarker Betrieb des Moduls 100, lediglich mit Zuleitung einer Betriebsspannung, mittels einer Zündeinheit, die aus den Komponenten 120 und 140 aufgebaut ist, und den weiteren Komponenten 171A, 171B möglich ist. Durch diesen modularen Aufbau kann insbesondere die Leiterplatte 170 separat gefertigt und bestückt werden und dann im Raumbereich 160 des Trägers 100 geeignet angeordnet und über entsprechende Verbindungen der im Träger 100 vorgesehenen Leiterbahnen angeschlossen werden. Erfindungsgemäß enthalten die Komponenten 171A, 171B zumindest einige der elektrischen Komponenten, die zum Erzeugen einer geeigneten Gleichspannung oder Wechselspannung von einigen 10 Volt bis zu mehreren hundert Volt, um einen kontinuierlichen Betrieb der Entladungsleuchte 150 nach dem Zünden zu ermöglichen. Ferner können die Komponenten 171A, 171B auch Teile einer Schaltungen repräsentieren, die für eine zuverlässige Überwachung und Steuerung erforderlich sind.

Die Lage der Platine 170 ist so gewählt, dass zusätzlich zum Erreichen eines kompakten Aufbaus sich auch die thermischen Verhältnisse innerhalb des Moduls 100 geeignet so einstellen, dass ein zuverlässiger Betrieb der Komponenten 171A, 171B möglich ist. Ferner können durch geeignete Maßnahmen, etwa Ferritplatten, Abschirmmaterialien und dergleichen, wie sie auch bereits zuvor genannt sind, entsprechende Bedingungen im Hinblick auf die Störstrahlung geschaffen werden. Beispielsweise kann die Platine 170 so angeordnet werden, dass ein Ferritmaterial zwischen dem Transformator 120 und der Platine 170 vorhanden ist, wie dies auch beispielsweise zuvor ausführlich erläutert ist. Ferner ist in einer Ausführungsformen die Platine 170 geeignet so aufgebaut, dass diese zumindest teilweise ein geeignetes Material für die Abschirmung, etwa in Form eines Ferritmaterials, enthält. In anderen Ausführungsformen können standardmäßige Leiterplattenmaterialien auf einen geeigneten Trägen, der die erforderlichen Eigenschaften, etwa im Hinblick auf die Abschirmung, erfüllt, aufgebracht werden. In anderen Ausführungsformen wird die Leiterplatte als spritzgegossener Schaltungsträger (MID) bereitgestellt, so dass insbesondere in Bezug auf die Basismaterialien und die Leiterbahnmaterialien ein hoher Grad an Flexibilität besteht, während auch eine effiziente Herstellung der Platine 170 gemäß den Anforderungen für die Integration in das Modul 100 ermöglicht wird. In anderen Ausführungsformen sind noch weitere elektrische Komponenten vorgesehen, die nicht Teil der Platine 170 sind, die somit direkt auf den Träger 100 aufgebracht werden können, wobei die erforderlichen elektrischen Verbindungen in oder auf dem Träger 100 vorgesehen werden, so dass dieser als Teil einer "Leiterplatte" dient. Des Weiteren kann die Leiterplatte 170, insbesondere wenn diese in MID-Technologie ausgeführt wird, eine beliebige geeignete Gestalt erhalten, um weitere Funktionen in dem Ansteuermodul 110 zu übernehmen, wie dies in den Fig. 1J und 1K gezeigt ist.

Fig. 1J zeigt schematisch eine Querschnittsansicht des Ansteuermoduls 100, in welchen etwa das Bauelement 140B, d. h. ein Kondensator, in geeigneter Weise an dem Träger 110 angebracht ist, indem etwa ein Kontur 110B des Trägers 110 dem Bauelement 140B angepasst ist. Ferner ist die Platine 170 so vorgesehen, dass diese platzsparend in einer "dreidimensionalen" Konfiguration am Träger 110 befestigt ist. Dazu besitzt die Platine 170 einen ersten Platinenbereich 170A und einen zweiten Platinenbereich 170B, die zueinander angewinkelt angeordnet sind, so dass der Flächenbedarf in dem Träger 110 reduziert wird, wobei dennoch die erforderliche Anzahl an elektrischen Komponenten 171A, 171B mit den zugehörigen elektrischen Leiterbahnen 172 bereitgestellt werden kann. Insbesondere unter Anwendung der MID-Technik können beliebige geeignete Gestaltungsvarianten für die Platine 170 vorgesehen werden, um damit eine optimale Ausnutzung des Bauvolumens innerhalb des Trägers 110 zu erreichen. In der gezeigten Ausführungsform ist ferner eine weitere elektrische Komponente 171C vorgesehen, die nicht unmittelbar zur Zündeinheit des Ansteuermoduls 100 gehört. Beispielsweise repräsentiert die Komponente 171C ein im Vergleich zu den elektrischen Komponenten 171A, 171B großvolumiges oder schweres Bauelement, das in geeigneter Weise an dem Träger 110 befestigt ist, beispielsweise durch Vorsehen einer Vergusskammer 173 und Vergießen des Bauelements, durch geeignete Ausbildung der Kontur des Trägers 110, und dergleichen. Beispielsweise sind typischerweise weitere induktive Komponenten, etwa eine Spule und/oder ein Trafo in dem Ansteuermodul 100 erforderlich, um die für den kontinuierlichen Betrieb erforderliche Gleichspannung oder Wechselspannung bereitzustellen. Somit kann die Komponente 171C in zuverlässiger Weise im Rahmen der Bestückung des Trägers 110 mit den Bauelementen 140 und dem Trafo 120 (siehe Fig. 1A) am Träger angebracht und geeignet elektrisch verbunden werden. Auch diese Weise wird die Montage der Platine 170, die die weiteren Komponenten trägt, die für die Steuerung und den kontinuierlichen Betrieb erforderlich sind, vereinfacht, da ein höherer Grad an Flexibilität für die geeignete Gestaltung erreicht wird. Ferner bietet das unmittelbare Fixieren schwerer und voluminöser Komponenten, beispielsweise der Komponente 171C, direkt an dem Träger 110 die Möglichkeit, eine bessere mechanische Stabilität zu erreichen.

Fig. 1K zeigt schematisch eine Querschnittsdarstellung des Ansteuermoduls 100 in einer weiteren Ausführungsform, in der die Platine 170 als Abdeckung des Trägers 110 dient. Dabei sind beispielsweise Verbindungseinrichtungen 174 vorgesehen, um an den geeigneten Stellen eine Verbindung zu Leiterbahnen des Trägers 110 herzustellen, die etwa in den Gehäusewänden des Trägers 110 verlaufen, wie dies auch zuvor erläutert ist. Bei Bedarf können auch geeignete Anschlussstellen im Träger 110 vorgesehen werden, so dass zusätzlich oder alternativ zu den Anschlussbereichen 174 für die Wände des Trägers 110 weitere Anschlusspunkte oder Auflagepunkte geschaffen werden. Ferner sind in der gezeigten Ausführungsform die weiteren Komponenten 171C, 171D direkt am Träger 110 vorgesehen und entsprechend kontaktiert, so dass insbesondere schwere und großvolumige Bauelemente nicht auf der Platine 170 angeordnet werden müssen. Auch ist eine Ferritplatte 124F zumindest zwischen dem Hochspannungstransformator 120 und der Platine 170 angebracht, um die magnetische Störung in der Platine 170 zu verringern und um auch eine Einwirkung der Platine 170 auf den Transformator 120, beispielsweise durch das Erzeugen von Wirbelströmen, und dergleichen, zu reduzieren.

## Patentansprüche

1. Ansteuermodul (100) für eine Gasentladungsleuchte (150) mit
einem Träger (110) zur Aufnahme elektrischer Komponenten (140) zum Zünden und zum Betreiben der Gasentladungsleuchte (150) nach dem Zünden,
einem auf dem Träger (110) fixierten Zündtransformator (120),
einem an dem Träger (110) angebrachten Leuchtensockel (130), der zumindest teilweise aus einem hochtemperaturfesten Kunststoff aufgebaut ist, der zumindest bei Temperaturen von größer 105 °C formstabil ist und eine integrierte Leiterbahn (132), die nahezu vollständig im Material des Leuchtensockels (130) verläuft, zum Verbinden eines Hochspannungsanschlusses (131) des Leuchtensockels (130) mit einem Hochspannungsanschluss (121) des Zündtransformators (120) aufweist,
mehreren elektrischen Komponenten, die an dem Träger (110) fixiert und im Zusammenwirken mit dem Zündtransformator (120) ausgebildet sind, die Gasentladungsleuchte (150) mit Energie zu versorgen und
einer Leiterplatte (170) mit weiteren elektrischen Komponenten (171A, 171B), die zumindest einige der elektrischen Komponenten enthalten, die zum Erzeugen einer Gleichspannung oder Wechselspannung für den kontinuierlichen Betrieb der Gasentladungsleuchte vorgesehen sind.

2. Ansteuermodul (100) nach Anspruch 1, wobei zumindest ein Teil des Trägers (110) aus Kunststoffmaterial mit einer geringeren Temperaturbeständigkeit im Vergleich zu dem Leuchtensockel (130) aufgebaut ist.

3. Ansteuermodul (100) nach einem der Ansprüche 1 oder 2, wobei der Leuchtensockel (130) einen Hochspannungsanschlussbereich aufweist, der von einem Vergussraum (111) zum Einfüllen einer Vergussmasse (112) nach Kontaktierung des Hochspannungsanschlusses (131) der Entladungsleuchte umgeben ist.

4. Ansteuermodul (100) nach einem der Ansprüche 1 bis 3, das ferner eine Vergusskammer (111) aufweist, die den Zündtransformator (120) lateral umschließt und mit einem Vergussmaterial (112) gefüllt ist.

5. Ansteuermodul (100) nach einem der Ansprüche 1 bis 4, wobei eine Ferritplatte (124A; 124B) zumindest an einigen Bereichen benachbart zu dem Zündtransformator (120) innerhalb der Vergusskammer (111) vorgesehen ist.

6. Ansteuermodul (100) nach Anspruch 5, wobei der Zündtransformator (120) länglich ausgebildet ist und jeweils eine Ferritplatte (124A; 124B) an jeder Stirnseite und/oder der Längsseite des Zündtransformators (120) angeordnet ist.

7. Ansteuermodul (100) nach Anspruch 4 oder 5, wobei Ferritmaterial in dem Vergussmaterial (112) und/oder in Wandbereichen der Vergusskammer (111) enthalten ist.

8. Ansteuermodul (100) nach einem der Ansprüche 1 bis 7, wobei der Träger (110) eine Grundplatte (110B) und zumindest Seitenteile (110S) aufweist und wobei die Grundplatte (110B) und/oder eines oder mehrere der Seitenteile (110S) aus Kunststoffmaterial aufgebaut sind, und in das Kunststoffmaterial ein oder mehrere leitende oder nicht leitende Metall enthaltende Materialien integriert sind, die ein Füllmaterial zur zumindest lokalen Erhöhung der Wärmeleitfähigkeit des Trägers (110) umfassen, wobei das Füllmaterial insbesondere ein Ferritmaterial oder Aluminiumoxid umfasst.

9. Ansteuermodul (100) nach einem der Ansprüche 1 bis 7, wobei der Träger (110) eine Grundplatte (110B) und zumindest Seitenteile (110S) aufweist und wobei die Grundplatte (110B) und/oder eines oder mehrere der Seitenteile (110S) aus Kunststoffmaterial aufgebaut sind, und in das Kunststoffmaterial zumindest eine Metallbahn als eine Leiterbahn zur Verbindung der elektrischen Verbindungen integriert ist.

10. Ansteuermodul (100) nach einem der Ansprüche 1 bis 9, wobei die Kontur des Trägers (110) der Kontur zumindest einigen der elektrischen Komponenten (140) zur Verbesserung der Vibrationsbeständigkeit angepasst ist.

11. Ansteuermodul (100) nach Anspruch 10, wobei die einigen der elektrischen Komponenten (140) elektrische Komponenten zum Zünden der Gasentladungsleuchte sind und einen Kondensator (140B) und eine Funkenstrecke (140A) umfassen.

12. Ansteuermodul (100) nach einem der Ansprüche 1 bis 11, wobei die elektrischen Komponenten eine Zündeinheit als eine erste Funktionsgruppe des Ansteuermoduls (100) bilden und zumindest einige der Leiterbahnen der Zündeinheit im Material des Trägers (110) integriert sind, wobei eine zweite Funktionsgruppe mit den weiteren elektrischen Komponenten vorgesehen ist, von denen zumindest einige auf der Leiterplatte (170) montiert sind, die über Verbindungen mit der Zündeinheit verbunden ist, und wobei die Leiterplatte (170) als spritzgegossener Schaltungsträger ausgebildet ist, wobei insbesondere einige der Verbindungen lötfreie Verbindungen sind.

13. Ansteuermodul (100) nach Anspruch 12, wobei die Leiterplatte (170) mindestens zwei zueinander angewinkelte Leiterplattenbereiche (170A, 170B) umfasst.

14. Ansteuermodul (100) nach einem der Ansprüche 12 oder 13, wobei ein Abschirmmaterial, insbesondere ein Ferritmaterial, zwischen Leiterbahnen der Leiterplatte (170) und dem Zündtransformator (120) angeordnet ist.

15. Ansteuermodul (100) nach Anspruch 14, wobei das Abschirmmaterial als ein Teil der Leiterplatte (170) vorgesehen ist.

## Claims

1. A driving module (100) for a gas discharge lamp (150) comprising
a carrier (110) for accommodating electrical components (140) for igniting and operating the gas discharge (150) lamp after ignition,
an ignition transformer (120) fixed in position on the carrier (110),
a lamp socket (130) attached to the carrier (110) and composed, at least partially, of a high temperature resistant plastic material, which is dimensionally stable at least at temperatures higher than 105°C and which includes an integrated conducting track (132) for connecting a high-voltage connection (131) of the lamp socket (130) to a high-voltage connection **(121)** of the ignition transformer (120), and
a plurality of electrical components fixed to the carrier (110) and configured for supplying, in association with the ignition transformer (120), the gas discharge lamp (150) with energy, and
a printed circuit board (170) including further electrical components (171A, 171B) that include at least some of the electrical components that are provided for generating a DC voltage or an AC voltage for continuous operation of the gas discharge lamp.

2. A driving module (100) according to claim 1, wherein at least part of the carrier (110) is composed of a plastic material having a lower temperature resistance than the lamp socket (130).

3. A driving module (100) according to one of the claims 1 or 2, wherein the lamp socket (130) comprises a high-voltage connection region surrounded by a potting space (111) for receiving therein a potting material (112) after contacting of the high-voltage connection (131) of the discharge lamp.

4. A driving module (100) according to one of the claims 1 to 3, additionally comprising a potting chamber (111) which laterally encompasses the ignition transformer (120) and which is filled with a potting material (112).

5. A driving module (100) according to one of the claims 1 to 4, wherein a ferrite plate (124A, 124B) is provided at least in some areas adjacent to the ignition transformer (120) in the interior of the potting chamber (111).

6. A driving module (100) according to claim 5, wherein the ignition transformer (120) is elongate in shape and a respective ferrite plate (124A; 124B) is arranged on each end face and/or the length side of the ignition transformer (120).

7. A driving module (100) according to claims 4 or 5, wherein ferrite material is contained in the potting material (112) and/or in wall areas of the potting chamber (111).

8. A driving module (100) according to one of the claims 1 to 7, wherein the carrier (110) comprises a base plate (110B) and at least side parts (110S), and wherein the base plate (110B) and/or one or a plurality of the side parts (110S) are composed of a plastic material, and said plastic material has integrated therein one or a plurality of conductive or non-conductive materials containing metal, which comprise a filling material for increasing the thermal conductivity of the carrier (110)at least locally, and wherein the filling material in particular comprises a ferrite material or an aluminium oxide.

9. A driving module (100) according to one of the claims 1 to 7, wherein the carrier (110) comprises a base plate (110B) and at least side parts (110S), and wherein the base plate (110B) and/or one or a plurality of the side parts (110S) are composed of a plastic material, and said plastic material has integrated therein at least one metal track as a conducting track for connecting the electrical connection.

10. A driving module (100) according to one of the claims 1 to 8, wherein the contour of the carrier (110) is adapted to the contour of at least some of the electrical components (140) for improving the vibration resistance.

11. A driving module (100) according to claim 10, wherein said some of the electrical components (140) are electrical components for igniting the gas discharge lamp and comprise a capacitor (140B) and a discharger (140A).

12. A driving module (100) according to one of the claims 1 to 11, wherein said electrical components define an ignition unit as a first functional group of the driving module (100), and wherein at least some of the conducting tracks of the ignition unit are integrated in the material of the carrier (110), wherein a second functional group comprising the further electrical components is provided, at least some of said further electrical components being mounted on the printed circuit board (170) which is connected to the ignition unit via connections, and wherein the printed circuit board (170) is configured as a molded interconnect device, wherein in particular at least some of the connections are solderless connections.

13. A driving module (100) according to claim 12, wherein the printed circuit board (170) comprises at least two circuit board areas (170A, 170B) extending at an angle relative to one another.

14. A driving module (100) according to one of the claims 12 or 13, wherein a shielding material, in particular a ferrite material, is disposed between conducting tracks of the printed circuit board (170) and the ignition transformer (120).

15. A driving module (100) according to claim 14, wherein the shielding material is provided as a part of the printed circuit board (170).

## Revendications

1. Module de commande et d'amorçage (100) pour une lampe à décharge gazeuse (150), comprenant un support (110) destiné à accueillir des composants électriques (140) pour l'amorçage et le fonctionnement de la lampe à décharge gazeuse (150) après l'amorçage, un transformateur d'amorçage (120) fixé sur le support (110),
une embase de lampe (130) placée sur le support (110), qui est réalisée au moins partiellement en une matière plastique résistant aux températures élevées, qui est de forme stable au moins à des températures de plus de 105°C, et présente une piste conductrice (132) intégrée s'étendant pratiquement en totalité dans le matériau de l'embase de lampe (130) pour assurer la liaison d'une borne de raccordement haute tension (131) de l'embase de lampe (130) à une borne de raccordement haute tension (212) du transformateur d'amorçage (120),
plusieurs composants électriques, qui sont fixés au support (110) et sont configurés pour alimenter en énergie la lampe à décharge gazeuse (150), par interaction avec le transformateur d'amorçage (120), et une plaque de circuit imprimé (170) comprenant d'autres composants électriques (171A, 171B), qui englobent au moins quelques-uns des composants électriques prévus pour produire une tension continue ou une tension alternative pour le fonctionnement continu de la lampe à décharge gazeuse.

2. Module de commande et d'amorçage (100) selon la revendication 1, dans lequel au moins une partie du support (110) est réalisée en une matière plastique d'une tenue à la température moindre comparativement à l'embase de lampe (130).

3. Module de commande et d'amorçage (100) selon l'une des revendications 1 ou 2, dans lequel l'embase de lampe (130) présente une zone de raccordement haute tension, qui est entourée d'une chambre de scellement (111) destinée à être remplie d'une masse de scellement (112) après avoir établi le contact avec la borne de raccordement haute tension (131) de la lampe à décharge gazeuse.

4. Module de commande et d'amorçage (100) selon l'une des revendications 1 à 3, comprenant, par ailleurs, une chambre de scellement (111), qui entoure latéralement le transformateur d'amorçage (120) et est remplie d'une matière de scellement (112).

5. Module de commande et d'amorçage (100) selon l'une des revendications 1 à 4, dans lequel il est prévu une plaque de ferrite (124A; 124B) au moins dans certaines zones voisines du transformateur d'amorçage (120) à l'intérieur de la chambre de scellement (111).

6. Module de commande et d'amorçage (100) selon la revendication 5, dans lequel le transformateur d'amorçage (120) est d'une configuration allongée, et une plaque de ferrite (124A; 124B) est respectivement prévue sur chaque côté frontal et/ou sur le côté longitudinal du transformateur d'amorçage (120).

7. Module de commande et d'amorçage (100) selon la revendication 4 ou la revendication 5, dans lequel du matériau de ferrite est contenu dans le matériau de scellement (112) et/ou dans des zones de paroi de la chambre de scellement (111).

8. Module de commande et d'amorçage (100) selon l'une des revendications 1 à 7, dans lequel le support (110) comprend une plaque de base (110B) et au moins des parties latérales (110S), et dans lequel la plaque de base (110B) et/ou une ou plusieurs des parties latérales (110S) sont fabriquées en une matière plastique, et dans la matière plastique sont intégrés un ou plusieurs matériaux conducteurs ou non conducteurs renfermant du métal, qui englobent un matériau de charge pour augmenter au moins localement la conductibilité thermique du support (110), le matériau de charge comprenant notamment un matériau de ferrite ou un oxyde d'aluminium.

9. Module de commande et d'amorçage (100) selon l'une des revendications 1 à 7, dans lequel le support (110) comprend une plaque de base (110B) et au moins deux parties latérales (110S), et dans lequel la plaque de base (110B) et/ou une ou plusieurs des parties latérales (110S) sont fabriquées en une matière plastique, et dans la matière plastique est intégrée au moins une piste métallique en tant que piste conductrice destinée à relier les liaisons électriques.

10. Module de commande et d'amorçage (100) selon l'une des revendications 1 à 9, dans lequel le contour du support (110) est adapté au contour d'au moins certains des composants électriques (140) pour améliorer la tenue aux vibrations.

11. Module de commande et d'amorçage (100) selon la revendication 10, dans lequel lesdits certains composants électriques (140) sont des composants électriques pour l'amorçage de la lampe à décharge gazeuse et englobent un condensateur (140B) et un éclateur (140A).

12. Module de commande et d'amorçage (100) selon l'une des revendications 1 à 11, dans lequel les composants électriques forment une unité d'amorçage en tant que premier groupe fonctionnel du module de commande et d'amorçage (100), et au moins quelques-unes des pistes conductrices de l'unité d'amorçage sont intégrées au matériau du support (110), module dans lequel il est prévu un deuxième groupe fonctionnel avec les autres composants électriques dont au moins certains sont montés sur la plaque de circuit imprimé (170), qui est reliée par l'intermédiaires des liaisons à l'unité d'amorçage, et dans lequel la plaque de circuit imprimé (170) est réalisés sous la forme d'un support de circuit moulé par injection, notamment au moins quelques liaisons de connexion étant des liaisons de connexion sans soudure.

13. Module de commande et d'amorçage (100) selon la revendication 12, dans lequel la plaque de circuit imprimé (170) comprend au moins deux zones de plaque de circuit imprimé (170A, 170B) coudées angulairement l'une par rapport à l'autre.

14. Module de commande et d'amorçage (100) selon l'une des revendications 12 ou 13, dans lequel un matériau de blindage, notamment un matériau de ferrite est agencé entre des pistes conductrices de la plaque de circuit imprimé (170) et le transformateur d'amorçage (120) .

15. Module de commande et d'amorçage (100) selon la revendication 14, dans lequel le matériau de blindage est prévu en tant qu'une partie de la plaque de circuit imprimé (170).
